# EUROPEAN PATENT APPLICATION

(11) **EP 2 581 975 A1**
(43) Date of publication of application: **17.04.2013**
(21) Application number: 11792506.5
(22) Date of filing: 02.06.2011
(51) Int. Cl.: H01M 8/16, H01M 4/90, H01M 8/02

(54) **FUEL CELL**

(30) Priority: 09.06.2010 JP 2010131572
(71) Applicant: Sony Corporation, Tokyo 108-0075 (JP)
(72) Inventor: NAKAGAWA, Takaaki, Tokyo 108-0075 (JP); SAMUKAWA, Tsunetoshi, Tokyo 108-0075 (JP); MITA, Hiroki, Tokyo 108-0075 (JP); SUGIYAMA, Taiki, Tokyo 108-0075 (JP); MATSUMOTO, Ryuhei, Tokyo 108-0075 (JP); SAKAI, Hideki, Tokyo 108-0075 (JP)
(74) Representative: Müller - Hoffmann & Partner
(86) International application number: PCT/JP2011/063196
(87) International publication number: WO 2011/155549

(57) **Abstract**

A fuel cell that can have a higher battery capacity without degradation of cathode characteristics is provided.

In a biofuel cell that includes one or more battery cell units (1) in which an oxidoreductase exists on the surface of an anode (2) and/or a cathode (3), and the cathode (3) is in contact with both a liquid phase and a gas phase, a selective transmission film (6) that restrains permeation of at least the fuel component is provided between an anode solution unit (4) provided around the anode (2) and a cathode solution unit (5) provided around the cathode (3). The fuel component concentration in the solution in contact with the anode (2) is higher than that in the solution in contact with the cathode (3).

## Description

### TECHNICAL FIELD

The present invention relates to a biofuel cell that uses an oxidoreductase. More particularly, the present invention relates to a technique for improving performance of a biofuel cell.

### BACKGROUND ART

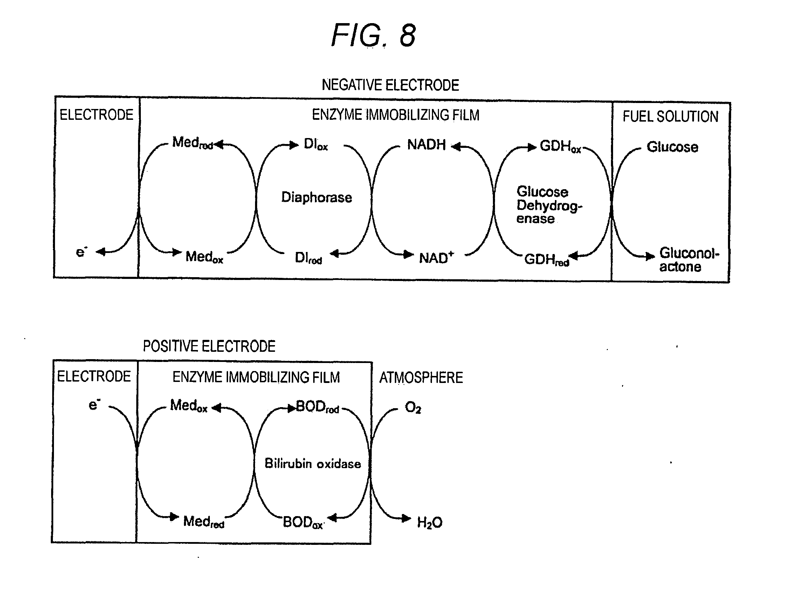

A biofuel cell that uses an oxidoreductase as a reaction catalyst can efficiently extract electrons from fuel such as glucose or ethanol, which cannot be used as a general industrial catalyst. Therefore, biofuel cells are drawing attention as next-generation fuel cells with a large capacity and a high level of safety. Fig. 8 is a diagram showing a reaction scheme of a biofuel cell that uses an enzyme. As shown in Fig. 8, in a biofuel cell using glucose as the fuel, an oxidation reaction of glucose progresses to extract electrons at the negative electrode (the anode), and a reduction reaction of oxygen (O₂) in the atmosphere progresses at the positive electrode (the cathode).

In a conventional biofuel cell, an anode and a cathode are positioned to face each other via an insulating film having proton permeability and an electrolyte layer containing a buffering substance, and the fuel solution is not in contact with the cathode serving as an air electrode (see Patent Documents 1 through 3, for example). There has also been a suggested biofuel cell that has the cathode in contact with a buffer solution saturated with dissolved oxygen (see Patent Document 4, for example). In this biofuel cell disclosed in Patent Document 4, the fuel solution in contact with the anode and the buffer solution in contact with the cathode are separated from each other by a salt bridge or a polymer electrolyte film.

In a biofuel cell, the substrate specificity of the enzyme serving as a reaction catalyst is high. Therefore, even when a fuel such as glucose is brought into contact with the air electrode (the cathode), the battery characteristics are hardly affected, and cross-over does not easily occur. Accordingly, not only biofuel cells of air-exposure types as disclosed in Patent Documents 1 through 3, but also immersion-type biofuel cells each having a fuel solution in contact with both the anode and the cathode can be realized.

### CITATION LIST

### PATENT DOCUMENTS

Patent Document 1: Japanese Patent Application Laid-Open No. 2006-93090
Patent Document 2: Japanese Patent Application Laid-Open No. 2008-305559
Patent Document 3: Japanese Patent Application Laid-Open No. 2009-245920
Patent Document 4: Japanese Patent Application Laid-Open No. 2006-508519

### SUMMARY OF THE INVENTION

### PROBLEMS TO BE SOLVED BY THE INVENTION

To continue power generation with the fuel electrode (the anode) in a biofuel cell, a sufficient fuel component such as glucose needs to exist in the fuel solution. Further, to increase the battery capacity, a fuel solution having a higher component concentration than that of the fuel needs to be used. However, if the concentration of a fuel component such as glucose is made higher, the viscosity of the fuel solution becomes higher. Therefore, in the case of an immersion-type biofuel cell, the diffusion coefficient becomes lower, and the characteristics of the air electrode (the cathode) are degraded.

Therefore, the principal object of the present invention is to provide a fuel cell that can increase its battery capacity without degrading the cathode characteristics.

### SOLUTION TO PROBLEMS

A fuel cell according to the present invention includes one or more battery cell units in which an oxidoreductase exists on the surface of an anode and/or a cathode, and the cathode is in contact with both a liquid phase and a gas phase.

In this battery cell unit, a selective transmission film that restrains permeation of at least the fuel component is provided between a first solution unit provided around the anode and a second solution unit provided around the cathode.

Here, the surface of each of the anode and the cathode includes the entire external surface of the electrode and the entire internal surface of the space inside the electrode, and this also applies to the cases described below.

In the present invention, the selective transmission film that restrains permeation of at least the fuel component is provided between the first solution unit and the second solution unit. Accordingly, diffusion of the fuel component into the cathode side can be restrained.

In this fuel cell, the fuel component concentration in the solution in contact with the anode can be made higher than that in the solution in contact with the cathode.

In that case, a fuel solution having a lower fuel component concentration may be introduced from the first solution unit into the second solution unit via the selective transmission film.

Also, a first inlet through which a solution is introduced into the first solution unit and a second inlet through which a solution is introduced into the second solution unit may be provided, and solutions having different fuel component concentrations from each other may be stored in the first solution unit and the second solution unit.

Further, the selective transmission film may also restrain permeation of an enzyme and/or a mediator.

Further, the fuel component may be a saccharide, for example.

Further, the selective transmission film may have a mean pore size of 0.5 µm or smaller.

Further, the selective transmission film may be formed of a cellulose film or a synthetic polymer film.

### EFFECTS OF THE INVENTION

According to the present invention, the fuel component concentration can be made higher only on the fuel electrode (anode) side. Accordingly, the battery capacity can be increased while a high battery power output is maintained, without degradation of the cathode characteristics.

### BRIEF DESCRIPTION OF DRAWINGS

Fig. 1 is a diagram schematically showing the structure of the battery cell unit in a fuel cell according to a first embodiment of the present invention.
Fig. 2 is a diagram schematically showing the structure of the battery cell unit in a fuel cell according to a modification of the first embodiment of the present invention.
Fig. 3 is a diagram schematically showing the structure of the battery cell unit in a fuel cell according to a second embodiment of the present invention.
Fig. 4(a) is a conceptual diagram showing an example in which cellophane is provided between respective solution units; Fig. 4(b) is a conceptual diagram showing a comparative example in which non-woven fabric is provided between respective solution units.
Fig. 5 is a graph showing the relationship between the glucose concentration in the fuel solution and the output in each of the fuel cells of the example and the comparative example, with the abscissa axis indicating glucose concentration and the ordinate axis indicating relative current.
Fig. 6 is a diagram schematically showing a cell used in Second Example of the present invention.
Figs. 7(a) and 7(b) are graphs showing temporal changes in the cell voltages of the biofuel cells of the example and the comparative example, with the abscissa axis indicating time and the ordinate axis indicating voltage.
Fig. 8 is a diagram showing a reaction scheme of a biofuel cell that uses an enzyme.

### MODE FOR CARRYING OUT THE INVENTION

The following is a detailed description of embodiments for carrying out the present invention, with reference to the accompanying drawings. It should be noted that the present invention is not limited to the embodiments described below. Explanation will be made in the following order.

### 1. First Embodiment

(Example of a biofuel cell in which a common solution inlet is provided, and a solution is separated in the battery cell unit)

### 2. Modification of the First Embodiment

(Example of a biofuel cell in which a selective transmission film also serves as a separator)

### 3. Second Embodiment

(Example of a biofuel cell in which a biofuel cell is provided on each of the anode side and the cathode side)

### <1. First Embodiment>

### [Structure of a Battery Cell Unit]

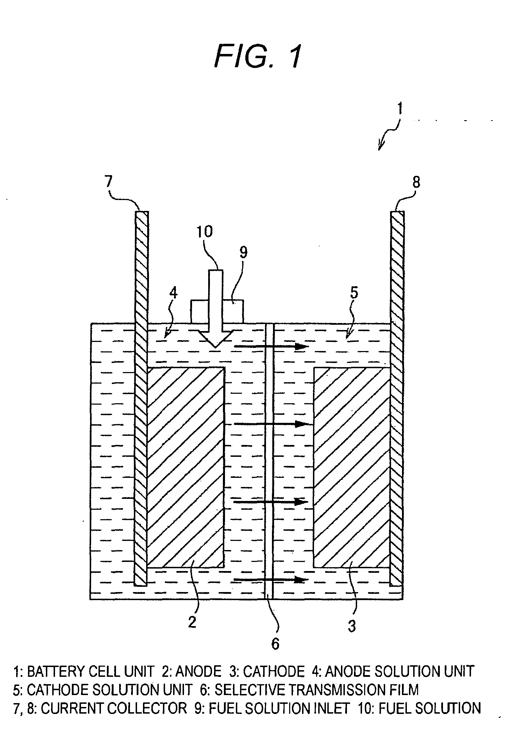

First, a biofuel cell according to a first embodiment of the present invention is described. Fig. 1 is a diagram schematically showing the structure of the battery cell unit in the fuel cell of this embodiment. As shown in Fig. 1, the biofuel cell of this embodiment is an immersion-type fuel cell in which electrolyte is in contact with both an anode (a fuel electrode) 2 and a cathode (an air electrode) 3.

In this biofuel cell, an oxidoreductase exists on the electrode surface of one or both of the anode 2 and the cathode 3. Here, the surface of an electrode includes the entire external surface of the electrode and the entire internal surface of the space inside the electrode, and this also applies to the cases described below. The cathode 3 is designed to be in contact with both a liquid phase (a solution) and a gas phase (the air). Current collectors 7 and 8 are provided in contact with the anode 2 and the cathode 3, respectively.

An anode solution unit 4 and a cathode solution unit 5 are provided around the anode 2 and the cathode 3, respectively, and a selective transmission film 6 is provided in between. Further, in the fuel cell of this embodiment, a fuel solution inlet 9 for introducing a fuel solution 10 into the battery cell unit 1 is provided, and this fuel solution inlet 9 leads to the anode solution unit 4.

### [Anode 2]

The anode 2 is a fuel electrode, and may be an anode that has an oxidoreductase immobilized onto the surface of an electrode made of a conductive porous material, for example. As the conductive porous material used at this point, a known material can be used, but it is particularly preferable to use a carbon-based material, such as porous carbon, carbon pellet, carbon felt, carbon paper, carbon fiber, or a stack structure formed of carbon fine particles.

As the enzyme to be immobilized onto the surface of the anode, glucose dehydrogenase (GDH), which breaks down glucose, can be used, if the fuel component is glucose, for example.

In a case where a monosaccharide such as glucose is used as the fuel component, a coenzyme oxidase and an electron mediator, as well as an oxidase such as GDH that facilitates oxidation of a monosaccharide and breaks down the monosaccharide, are preferably immobilized onto the surface of the anode.

A coenzyme oxidase oxidizes a coenzyme (such as NAD⁺ or NADP⁺) that is reduced with an oxidase, and a coenzyme reductant (such as NADH or NADPH). Such a coenzyme oxidase may be diaphorase, for example. By virtue of the action of the coenzyme oxidase, electrons are generated when a coenzyme returns to an oxidant, and the electrons are transferred from the coenzyme oxidase to the electrode via an electron mediator.

As the electron mediator, a compound having a quinone skeleton is preferably used, and a compound having a naphthoquinone skeleton is more preferable. Specifically, it is possible to use 2-amino-1,4-naphthoquinone (ANQ), 2-amino-3-methyl-1,4-naphthoquinone (AMNQ), 2-methyl-1,4-naphthoquinone (VK3), 2-amino-3-carboxy-1,4-naphthoquinone (ACNQ), or the like. As the compound having a quinone skeleton, it is possible to use anthraquinone or a derivative thereof, other than a compound having a naphthoquinone skeleton. Further, one or more compounds that function as electron mediators can be immobilized together with a compound having a quinone skeleton, where necessary.

In a case where a monosaccharide is used as the fuel component, it is preferable to immobilize a degrading enzyme that facilitates degradation such as hydrolytic degradation of a polysaccharide to generate a monosaccharide such as glucose, as well as the above mentioned oxidase, coenzyme oxidase, coenzyme, and electron mediator. It should be noted that a "polysaccharide" used herein is in a broad sense, and indicates all kinds of carbohydrates that generate two or more molecules of monosaccharides through hydrolytic degradation, including oligosaccharides such as disaccharides, trisaccharides, and tetrasaccharides. Specific examples include starch, amylose, amylopectin, glycogen, cellulose, maltose, sucrose, and lactose. Each of those examples is formed by two or more monosaccharides binding together, and any of those polysaccharides contains glucose as the monosaccharide serving as the binding unit.

Amylose and amylopectin are components contained in starch, and starch is a mixture of amylose and amylopectin. In a case where glucoamylase is used as a polysaccharide-degrading enzyme, and glucose dehydrogenase is used as a monosaccharide-degrading oxidase, for example, a polysaccharide that can be broken down into glucose by glucoamylase can be used as the fuel component. Examples of such polysaccharides include starch, amylose, amylopectin, glycogen, and maltose. Here, glucoamylase is a degrading enzyme that hydrolytically degrades α-glucan such as starch to generate glucose, and glucose dehydrogenase is an oxidase that oxides β-D-glucose into D-glucono-δ-lactone.

The anode 2 is not limited to an anode having an oxidoreductase immobilized to the surface thereof. As long as an oxidoreductase exists on the electrode surface, an electrode that has an oxidoreductase and has microorganisms serving as a reaction catalyst adhering to the surface can also be used.

### [Cathode 3]

The cathode 3 is an air electrode, and is in direct contact with the gas phase (the air) or in contact with the gas phase via a gas-liquid separation film. The electrode forming the cathode 3 is not particularly limited, and it is possible to use a cathode that has an oxidoreductase and an electron mediator immobilized to the surface of an electrode made of a conductive porous material, for example. As the conductive porous material forming the cathode 3, a known material can also be used, but it is particularly preferable to use a carbon-based material, such as porous carbon, carbon pellet, carbon felt, carbon paper, carbon fiber, or a stack structure formed of carbon fine particles.

Examples of oxygen reduction enzymes that can be immobilized onto the cathode 3 include bilirubin oxidase, laccase, and ascorbic acid oxidase. Examples of electron mediators that can be immobilized together with those enzymes include potassium hexacyanoferrate, potassium ferricyanide, and potassium octacyanotungstate.

The cathode 3 is not limited to a cathode having an oxidoreductase immobilized to the surface thereof either. As long as an oxidoreductase exists on the electrode surface, an electrode that has an oxidoreductase and has microorganisms serving as a reaction catalyst adhering to the surface can also be used.

### [Selective Transmission Film 6]

The selective transmission film 6 used in the biofuel cell of this embodiment has permeability, and restrain permeation of at least the fuel component contained in the fuel solution 10. The fuel solution 10 introduced into the anode solution unit 4 is further introduced into the cathode solution unit 5 via the selective transmission film 6.

The selective transmission film 6 may restrain not only permeation of the fuel component but also permeation of a component contained in the fuel solution 10 other than the fuel component. Particularly, the selective transmission film 6 preferably can restrain permeation of an enzyme or a mediator eluted in the fuel solution 10. With this arrangement, the enzyme and the mediator existing on each electrode can be prevented from migrating toward each other electrode, and accordingly, degradation of the battery characteristics can be prevented.

In a case where a fuel solution having an inhibitory effect on the cathode 3 or a commercially available beverage is used as the fuel solution 10, for example, the selective transmission film 6 may restrain permeation of a calorie-free sweetener, a saccharide (such as fructose or a fruit sugar) that cannot be oxidized by the enzyme of the anode 2, or the like. As a result, degradation of the battery characteristics can be prevented, and the power generation efficiency can be increased.

As such a selective transmission film 6, a cellulose film or a synthetic polymer film can be used, for example. Specific examples of cellulose films include regenerated cellulose (RC) films such as cupra-ammonium rayon (CR) and saponified cellulose (SCA), regenerated surface-modification cellulose films such as a hemophan film and a vitamin E coating film, and cellulose acetate (CA) films such as cellulose diacetate (CDA) and cellulose triacetate (CTA).

Examples of synthetic polymer films include polyacrylonitrile (PAN), polymethylmethacrylate (PMMA), an ethylene vinyl alcohol (EVA) copolymer, polysulfone (PS), polyamide (PA), and polyester polymer alloy.

The selective transmission film 6 can have a mean pore size of 0.5 µm or smaller, for example, and accordingly, can efficiently restrain permeation of the fuel component. The mean pore size of the selective transmission film 6 is preferably 100 nm or smaller, more preferably, 20 nm or smaller, or more preferably, 10 nm or smaller. With this, the effect to restrain permeation of the fuel component can be increased, and permeation of a component such as an enzyme or a mediator other than the fuel component can also be restrained.

Also, the selective transmission film 6 preferably adjusts the ion conductivity to 0.1 S/cm or higher between the anode 2 and the cathode 3, or adjusts the internal resistance of the battery cell unit 1 to 10 Ω or lower. With this, power generation loss can be reduced. The ion conductivity between the anode 2 and the cathode 3 can be determined by carrying out impedance measurement, with an electrolytic solution injected.

Further, the selective transmission film 6 preferably has chemical stability even in a solution with a pH of 3 to 12, and also has such a degree of heat resistance that the selective transmission film 6 is not modified under circumstances at 20 to 120°C. With this, modification and breaking in the solution can be prevented. Accordingly, power can be generated, without any problem such as short-circuiting.

### [Fuel Solution 10]

The fuel solution 10 is a fuel component such as sugar, alcohol, aldehyde, lipid, or protein, or a solution containing at least one of those fuel components. Examples of fuel components that can be used in the biofuel cell of this embodiment include saccharides such as glucose, fructose, and sorbose, alcohols such as methanol, ethanol, propanol, glycerin, and polynivyl alcohol, aldehydes such as formaldehyde and acetaldehyde, and organic acids such as acetic acid, formic acid, and pyruvic acid.

Other than those, fats, proteins, and organic acids that are intermediate products in sugar metabolism of those fats and proteins can also be used as fuel components. In addition to the above fuel component, the fuel solution 10 may contain an electrolyte functioning as a protonic conductor.

### [Operations]

Next, operations of the biofuel cell of this embodiment are described. In the biofuel cell of this embodiment, the fuel solution 10 is first introduced into the anode solution unit 4 through the fuel solution inlet 9. After that, the fuel solution is also supplied to the cathode solution unit 5 via the selective transmission film 6. However, permeation of the fuel component in the fuel solution 10 is restrained by the selective transmission film 6, and accordingly, a solution with a lower fuel component concentration is introduced into the cathode solution unit 5. That is, in the biofuel cell of this embodiment, the fuel solution in contact with the anode 2 has a higher fuel component concentration than the fuel solution in contact with the cathode 3.

At the anode 2 in this fuel cell, the fuel is broken down by the enzyme immobilized onto the surface, so that electrons are extracted, and proton (H⁺) is generated. At the cathode 3, on the other hand, water is generated from proton transported from the anode 2 via the protonic conductor, electrons transferred from the anode 2 through an external circuit, and oxygen in the solution (the liquid phase) stored in the cathode solution unit 5 or in the air (the gas phase), for example.

As described above, in the biofuel cell of this embodiment, the selective transmission film 6 that restrains permeation of the fuel component is provided between the anode solution unit 4 and the cathode solution unit 5. Accordingly, the fuel component can be restrained from diffusing to the cathode 3. With this, even if the fuel component concentration in the fuel solution 10 to be introduced into the anode solution unit 4 is made higher, the fuel component concentration in the solution to be introduced into the cathode solution unit 5 can be restricted to a low concentration. Accordingly, degradation of the characteristics of the cathode 3 can be prevented.

Further, in the biofuel cell of this embodiment, the fuel component concentration in the solution to be in contact with the anode 2 can be maintained at a high concentration, and accordingly, the power generation efficiency becomes higher. As a result, the power output of the battery is the same or higher than that of a conventional biofuel cell, and a biofuel cell with a larger battery capacity than that of a conventional biofuel cell can be realized.

This embodiment can be applied not only to "single-cell" structures each having one battery cell unit provided on the battery main body, but also to structures each having battery cell units connected in series or in parallel. In that case, a structure in which one fuel solution inlet is shared by battery cell units can also be formed.

### <2. Modification of the First Embodiment>

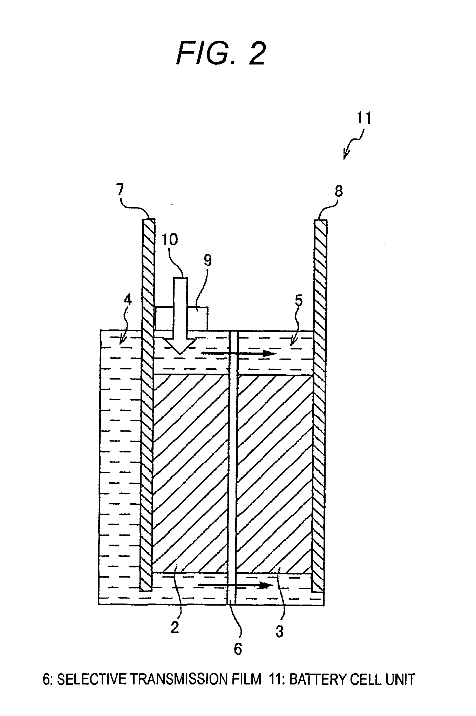

Next, a biofuel cell according to a modification of the first embodiment is described. Fig. 2 is a diagram schematically showing the structure of the battery cell unit in the biofuel cell of this modification. In Fig. 2, the same components as those of the fuel cell of the first embodiment illustrated in Fig. 1 are denoted by the same reference numerals as those used in the first embodiment, and detailed explanation thereof will not be repeated.

In the biofuel cell of the above described first embodiment, a space is left between the selective transmission film 6 and each of the anode 2 and the cathode 3. However, the present invention is not limited to that, and the anode 2 and the cathode 3 may be in contact with the selective transmission film 6, for example, as in the battery cell unit 11 illustrated in Fig. 2.

In that case, the selective transmission film 6 not only restrains permeation of the fuel component, but also functions as a separator to prevent short-circuiting of each electrode (the anode 2, the cathode 3) and further as a protonic conductor if water (ions) is contained therein. With this, the number of components in the battery cell unit 12 can be reduced. Accordingly, a biofuel cell of a smaller size can be realized at lower cost.

It should be noted that the aspects and effects of this modification other than the above described ones are the same as those of the above described first embodiment.

### <3. Second Embodiment>

### [Structure of a Battery Cell Unit]

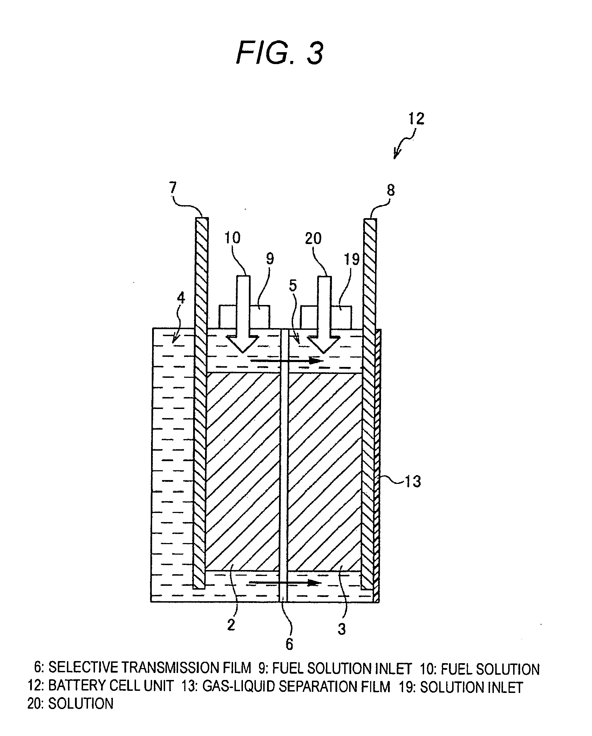

Next, a biofuel cell according to a second embodiment of the present invention is described. Fig. 3 is a diagram schematically showing the structure of the battery cell unit in the fuel cell of this embodiment. In Fig. 3, the same components as those of the fuel cell of the first embodiment illustrated in Fig. 1 are denoted by the same reference numerals as those used in the first embodiment, and detailed explanation thereof will not be repeated.

As shown in Fig. 3, the biofuel cell of this embodiment is an immersion-type fuel cell in which a fuel solution 10 is in contact with an anode (a fuel electrode) 2, and a solution 20 containing an electrolyte or the like is in contact with a cathode (an air electrode) 3. In this biofuel cell, an oxidoreductase exists on the surface of at least one of the electrodes (the anode 2 and/or the cathode 3) provided in the battery cell unit 12.

Also, in the biofuel cell of this embodiment, the cathode 3 is designed to be in contact not only with a liquid phase (the solution 20) but also with a gas phase (the air). Specifically, a gas-liquid separation film 13 may be provided in contact with a surface located outside the cathode 3, and the cathode is in contact with the gas phase (the air) via the gas-liquid separation film 13. Alternatively, the surface of the cathode 3 may have water-repellent properties, and may be in direct contact with the gas phase (the air). Further, current collectors 7 and 8 are provided in contact with the anode 2 and the cathode 3, respectively.

An anode solution unit 4 and a cathode solution unit 5 are provided around the anode 2 and the cathode 3, respectively, and a selective transmission film 6 is provided in between. In the fuel cell of this embodiment, a fuel solution inlet 9 leading to the anode solution unit 4 and a fuel solution inlet 19 leading to the cathode solution unit 5 are provided independently of each other. The fuel solution 10 is introduced into the anode solution unit 4 via the fuel solution inlet 9, and the electrolyte-containing solution 20 or the like, which differs from the fuel solution 10, is introduced into the cathode solution unit 5 via the fuel solution inlet 19.

### [Solution 20]

The solution 20 to be introduced into the cathode solution unit 5 is not particularly limited, and it is possible to use an aqueous solution (an electrolytic solution) containing an electrolyte such as dihydrogen phosphate or an imidazole compound, or an ionic liquid such as a potassium chloride solution, for example. The solution 20 functions mainly as a protonic conductor.

### [Operations]

Next, operations of the biofuel cell of this embodiment are described. First in the biofuel cell of this embodiment, the fuel solution 10 is introduced into the anode solution unit 4 through the fuel solution inlet 9, and the solution 20 such as an electrolytic solution is introduced into the cathode solution unit 5 through the fuel solution inlet 19. At this point, the fuel component contained in the fuel solution 10 stored in the anode solution unit 4 migrates into the solution 20 in the cathode solution unit 5. However, permeation of the fuel component is restrained by the selective transmission film 6, and accordingly, the fuel component concentration in the region surrounding the cathode 3 is maintained lower than that in the region surrounding the anode 2.

In the biofuel cell of this embodiment, the ion concentration in the solution 20 to be introduced into the cathode solution unit 5 is preferably made higher than that in the fuel solution 10, for example, so that the osmotic pressure of the solution 20 becomes higher than that of the fuel solution 10. With this, the amount of the fuel component migrating from the fuel solution 10 through the selective transmission film 6 can be reduced.

At the anode 2 in this biofuel cell, the fuel is also broken down by the enzyme immobilized onto the surface, so that electrons are extracted, and proton (H⁺) is generated, as in the biofuel cell of the above described first embodiment. At the cathode 3, water is generated from proton transported from the anode 2 via the protonic conductor, electrons transferred from the anode 2 through an external circuit, and oxygen in the solution 20 stored in the cathode solution unit 5 or in the gas phase (the air) in contact via the gas-liquid separation film 13, for example.

In the biofuel cell of this embodiment, the fuel solution inlet 19 leading to the cathode solution unit 5 is provided, independently of the fuel solution inlet 9. Accordingly, different solutions can be introduced into the anode solution unit 4 and the cathode solution unit 5. Further, in the biofuel cell of this embodiment, the selective transmission film 6 is provided between the anode solution unit 4 and the cathode solution unit 5. Accordingly, even if the fuel component concentration in the fuel solution 10 to be introduced into the anode solution unit 4 is made higher, the amount of the fuel component migrating into the solution 20 introduced into the cathode solution unit 5 can be restricted to a small amount. As a result, the fuel component concentration in the region surrounding the cathode 3 can be maintained low. Accordingly, degradation of the characteristics of the cathode 3 can be prevented.

It should be noted that the aspects and effects of this embodiment other than the above described ones are the same as those of the above described first embodiment. Also, in the biofuel cell illustrated in Fig. 3, the anode 2 and the cathode 3 are in contact with the selective transmission film 6. However, the present invention is not limited to that, and the anode, the selective transmission film, and the cathode may be positioned at predetermined intervals. Further, the mechanism for bringing the cathode 3 into contact with the gas phase is not limited to the structure in which the gas-liquid separation film 13 is provided in direct contact with the cathode 3 as shown in Fig. 3, and a water-repellent electrode may be provided in direct contact with the gas phase.

Further, this embodiment can be applied not only to "single-cell" structures each having one battery cell unit provided on the battery main body, but also to structures each having battery cell units connected in series or in parallel. In that case, each of the fuel solution inlet 9 and the fuel solution inlet 19 can be shared by two or more battery cell units.

### EXAMPLES

### <First Example>

In the following, the effects of the present invention are described in detail by way of examples of the present invention. First, in First Example of the present invention, a biofuel cell according to the first embodiment illustrated in Fig. 1 was prepared. Cellophane 26 was provided as the selective transmission film between the anode solution unit 4 and the cathode solution unit 5, and a fuel solution 10 having a glucose concentration varying from 0 to 1 M was used, to generate power at 0.25 V for 5 minutes. The current value was then measured. In a comparative example, non-woven fabric 106 was provided between the anode solution unit 4 and the cathode solution unit 5, and the same measurement as above was carried out.

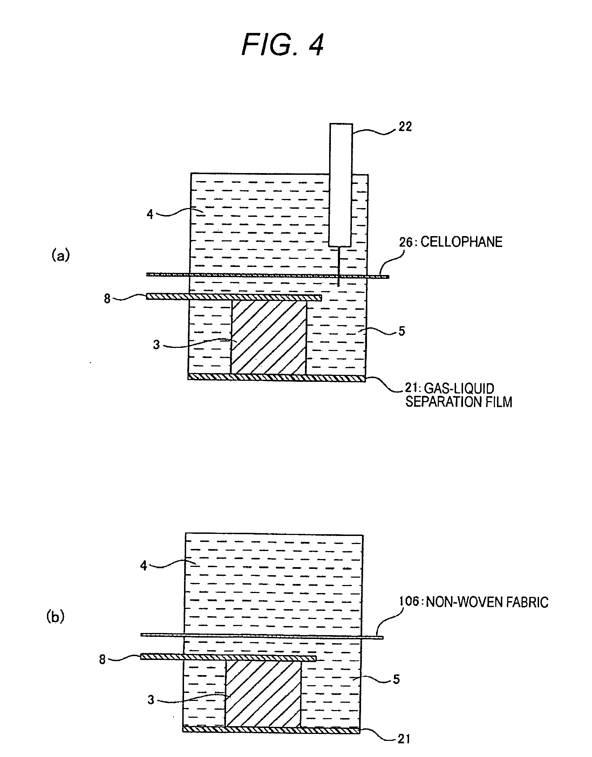

Fig. 4(a) is a conceptual diagram showing the example in which the cellophane 26 was provided between the respective solution units. Fig. 4(b) is a conceptual diagram showing a comparative example in which the non-woven fabric 106 was provided between the respective solution units. As shown in Figs. 4(a) and 4(b), a carbon fiber electrode (5 mm square, 2 mm thick) was used as the cathode 3, and a titanium mesh material was used as the current collector 8. Polytetrafluoroethylene (PTFE) serving as the gas-liquid separation film 21 was provided at an end of the cathode solution unit 5.

A 2.0 M imidazole/H₂SO₄ solution was used as the (pH 7) protonic conductor. In the biofuel cell of the example illustrated in Fig. 4(a), a syringe 22 was used to fill the cathode solution unit 5 with a 2.0 M imidazole/H₂SO₄ solution having no glucose added thereto, and fill the anode solution unit 4 with a 2.0 M imidazole/H₂SO₄ solution having a glucose concentration of 0 M, 0.2 M, 0.4 M, 0.8 M or 1.0 M. In the biofuel cell of the comparative example illustrated in Fig. 4(b), on the other hand, all components passed through the non-woven fabric 106. Therefore, each of the anode solution unit 4 and the cathode solution unit 5 was filled with the same solution or a 2.0 M imidazole/H₂SO₄ solution having a glucose concentration of 0 M, 0.2 M, 0.4 M, 0.8 M or 1.0 M.

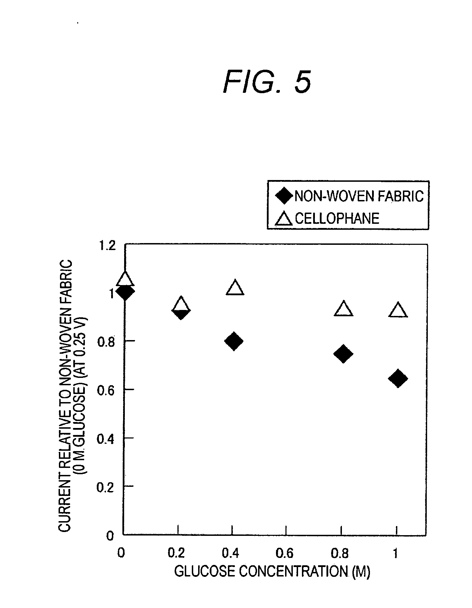

Fig. 5 is a graph showing the relationship between the glucose concentration in the fuel solution and the output in each of the fuel cells of the example and the comparative example. In this graph, the abscissa axis indicates glucose concentration, and the ordinate axis indicates relative current. The relative current values shown in Fig. 5 are values that were obtained where the reference current value (1.0) was the current value obtained when a 2.0 M imidazole/H₂SO₄ solution having a glucose concentration of 0 M was used in the biofuel cell of the comparative example illustrated in Fig. 4(b). As shown in Fig. 5, in the biofuel cell of the comparative example using non-woven fabric, the current value became lower as the glucose concentration in the fuel solution became higher. In the biofuel cell of the example using cellophane, on the other hand, the current value hardly decreased even when the glucose concentration was made higher.

### <Second Example>

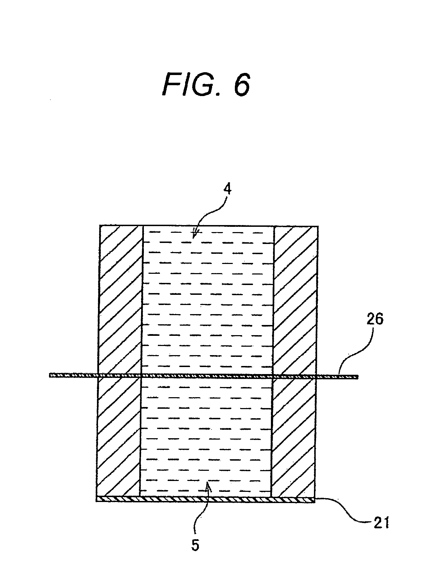

In Second Example of the present invention, the amount of glucose as the fuel component migrating from the anode solution unit 4 into the cathode solution unit 5 was measured in a case where the cellophane 26 was used as the selective transmission film. Fig. 6 is a diagram schematically showing a cell used in this example. In this example, PTFE was used as the gas-liquid separation film 21.

In this example, the cathode solution unit 5 was filled with a 2.0 M imidazole/H₂SO₄ solution having no glucose added thereto, and the anode solution unit 4 was filled with a 2.0 M imidazole/H₂SO₄ solution containing 0.8 M glucose. The cell was left for 2 hours. After that, each of the solutions was collected, and was diluted twentyfold with 2.0 M imidazole. The amount of the glucose contained in each of the diluted solutions was measured. For comparison, a 2.0 M imidazole/H₂SO₄ solution containing 0.8 M glucose and a 2.0 M imidazole/H₂SO₄ solution containing 0.04 M glucose were also diluted twentyfold with imidazole, and the amounts of the glucoses therein were measured.

As a result, it was confirmed that glucose hardly permeated the cathode solution unit 5. Even after the solutions were stirred and were left for 2 hours, migration of glucose was not observed. Further, another cellulose film and a synthetic polymer film were used as the selective transmission films 21, and the same experiment as above was conducted. As a result, the same effects as the effects of this example that used cellophane were achieved.

### <Third Example>

In Third Example of the present invention, the battery characteristics of the biofuel cells illustrated in Figs. 4(a) and 4(b) were evaluated. The fuel solution was a 2.0 M imidazole/H₂SO₄-0.4 M glucose solution or a 2.0 M imidazole/H₂SO₄-0-8 M glucose solution, and in the biofuel cell of the example illustrated in Fig. 4(a), the cathode solution unit 5 was filled with a 2.0 M imidazole/H₂SO₄ solution having no glucose added thereto. In those biofuel cells of the example and the comparative example, 20 mA constant current tests were conducted.

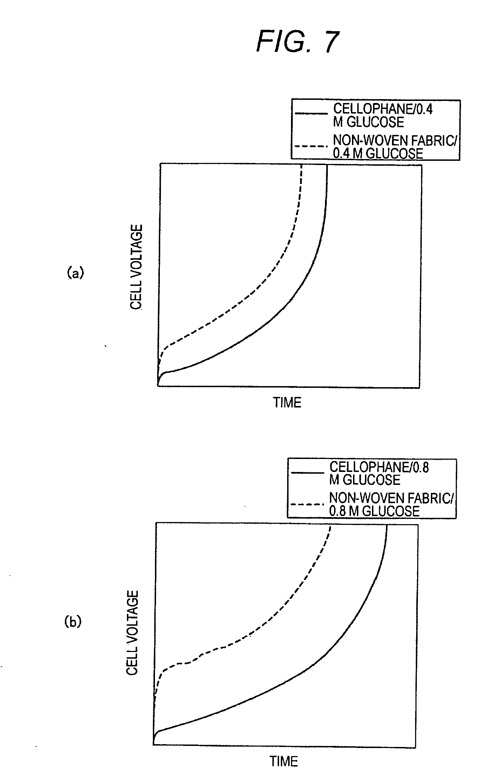

Figs. 7(a) and 7(b) are graphs showing temporal changes in the cell voltages in the biofuel cells of the example and the comparative example. In each of the graphs, the abscissa axis indicates time, and the ordinate axis indicates voltage. As shown in Figs. 7(a) and 7(b), the maximum output and the capacity of the biofuel cell of this example that used the cellophane 26 were approximately twice larger than those of the biofuel cell of the comparative example that used the non-woven fabric 106.

The above results confirmed that the battery capacity was increased without degradation of the cathode characteristics by providing the selective transmission film between the cathode solution unit and the anode solution unit.

### REFERENCE SIGNS LIST

1, 11, 12 ... Battery cell units 2 ... Anode 3 ... Cathode 4 ... Anode solution unit 5 ... Cathode solution unit 6 ... Selective transmission film 7, 8 ... Current collectors 9 ... Fuel solution inlet 10 ... Fuel solution 13, 21 ... Gas-liquid separation film 19 ... Solution inlet 20 ... Solution 22 ... Syringe 26 ... Cellophane 106 ... Non-woven fabric

## Claims

1. A fuel cell comprising a battery cell unit or a plurality of battery cell units each having an oxidoreductase on a surface of an anode and/or a cathode, the cathode being in contact with both a liquid phase and a gas phase,
wherein the battery cell unit has a selective transmission film between a first solution unit provided around the anode and a second solution unit provided around the cathode, the selective transmission film restraining permeation of at least a fuel component.

2. The fuel cell according to claim 1, wherein a solution in contact with the anode has a higher fuel component concentration than a solution in contact with the cathode.

3. The fuel cell according to claim 2, wherein a fuel solution having a lower fuel component concentration is introduced from the first solution unit into the second solution unit via the selective transmission film.

4. The fuel cell according to claim 2, further comprising:
a first inlet through which a solution is introduced into the first solution unit; and
a second inlet through which a solution is introduced into the second solution unit,
wherein solutions having different fuel component concentrations from each other are stored in the first solution unit and the second solution unit.

5. The fuel cell according to claim 4, wherein the selective transmission film further restrains permeation of an enzyme and/or a mediator.

6. The fuel cell according to claim 4, wherein the fuel component is a saccharide.

7. The fuel cell according to claim 4, wherein the selective transmission film has a mean pore size of 0.5 µm or smaller.

8. The fuel cell according to claim 4, wherein the selective transmission film is one of a cellulose film and a synthetic polymer film.

9. The fuel cell according to claim 4, wherein the cathode is in contact with the gas phase via a gas-liquid separation film.
